# EUROPÄISCHE PATENTSCHRIFT

(11) **EP 0 483 474 B1**
(45) Veröffentlichungstag und Bekanntmachung des Hinweises auf die Patenterteilung: **28.06.1995**
(21) Anmeldenummer: 91114137.2
(22) Anmeldetag: 23.08.1991
(51) Int. Cl.: F16C 3/06, F16C 3/20, F16F 15/24

(54) **Kurbelwelle für eine Brennkraftmaschine**
Internal combustion engine crankshaft
Vilebrequin de moteur à combustion interne

(30) Priorität: 29.10.1990 DE 4034384
(43) Veröffentlichungstag der Anmeldung: 06.05.1992
(73) Patentinhaber: Dr.Ing.h.c. F. Porsche Aktiengesellschaft, 70435 Stuttgart (DE)
(72) Erfinder: Distelrath, Winfried, W-7000 Stuttgart 31 (DE)

(56) Entgegenhaltungen:
- EP-A- 0 068 114
- CH-A- 383 083
- DE-A- 2 160 586
- GB-A- 290 591
- GB-A- 1 090 446
- MTZ MOTORTECHNISCHE ZEITSCHRIFT Bd. 50, Nr. 12, 1989, STUTTGART DE Seiten 566 -573 R. VAN BASSHUYSEN ET AL. 'Audi Turbodieselmotor mit Direkteinspritzung'

## Beschreibung

Die Erfindung bezieht sich auf eine Kurbelwelle für eine Brennkraftmaschine nach dem Oberbegriff des Anspruchs 1.

Aus der DE-A-36 14 722 ist eine Kurbelwelle für eine Brennkraftmaschine bekannt, deren Kurbelwangen Aussparungen an jeder Seite aufweisen und diese Aussparungen so angeordnet sind, daß im Überdeckungsbereich von Lagerzapfen und Kurbelzapfen eine maximale Wangendicke verbleibt.

Aufgabe der Erfindung ist es, eine Kurbelwelle der im Oberbegriff des Anspruchs 1 gekennzeichneten Art zu schaffen, die verbesserte Biege- und Torsionssteifigkeiten bei einem optimalen Massenausgleich gewährleistet.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erreichten Vorteile bestehen darin, daß durch die gezielt angeordneten Ausnehmungen in jeder Kurbelwange eine Gewichtsreduzierung bei einem wirksamen Massenausgleich ermöglicht wird. Insbesondere sind die Ausnehmungen in der Weise übereinander angeordnet, daß im gefährdeten Bereich jeder Kurbelwange trotz der maximal großen Ausnehmungen ein möglichst großer Querschnitt aufgebaut wird, der die Biege- und Torsionssteifigkeit definiert aufnimmt.

Die Ausnehmungen bilden in jeder Kurbelwange ein in den Längsebenen der Wange ausgerichtetes U-Profil, das eine optimale Torsions- und Biegesteifigkeit in der am meisten gefährdetsen Zone unterstützt.

Der große Querschnitt zwischen den beiden Ausnehmungen wird durch eine Versteifungsrippe erzielt, die eine höchste Erhebung im Bereich der Überdeckung zwischen Lager- und Pleuelzapfen aufweist.

Die Ausführung der Ausnehmungen, bzw. deren Form und Größe kann je nach den konstruktiven Gegebenheiten in den unmittelbar gegenüberliegenden Kurbelwangen unterschiedlich groß sein. So ist es vorteilig, wenn die Ausnehmungen im Bereich des Pleuelzapfens relativ groß sind, damit der rotierende Massenanteil verringert wird, was zu einem günstigeren Massenausgleich bei gleichzeitiger Gewichtsreduzierung führt. Diese Maßnahmen sind bei einer 4-Zylinder-Kurbelwelle ohne Einlegkerne einfach als Guß- und Schmiedeteil herstellbar.

Der Öffnungswinkel des Gegengewichts der Kurbelwange kann entsprechend der rotierenden Masse berechnet werden. Der Öffnungswinkel des Gegengewichts der Kurbelwange ist hinsichtlich eines relativen Optimums für minimal es Gewicht bei maximal möglichem Massenausgleich optimiert. In bezug auf einen Winkel von 180° liegen die Werte für den idealen Winkel bei 19.4 % Gewichtsersparnis und 4.6 % Unwuchtverlust.

Ausführungsbeispiele der Erfindung sind in der Zeichnung dargestellt und werden im folgenden näher beschrieben.

Es zeigen:

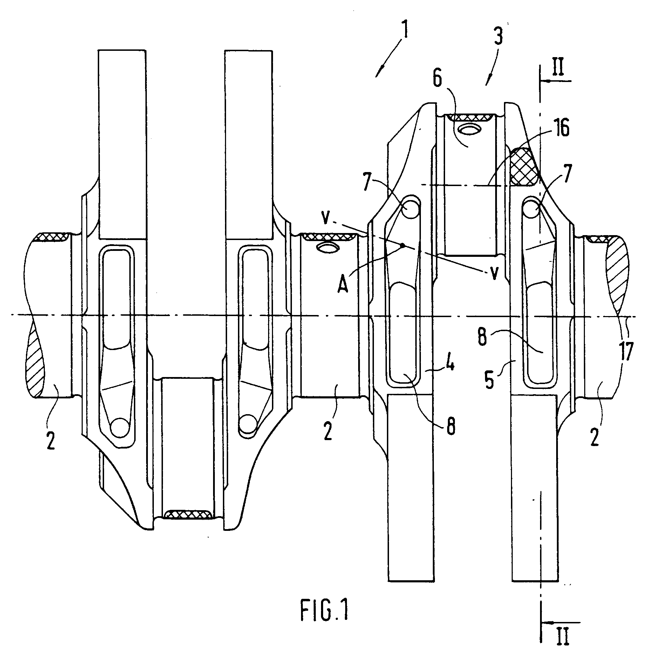

- Fig. 1: einen Teil einer Kurbelwelle mit in den Kurbelwangen - in bezug auf die Längsachsen - übereinander angeordneten Ausnehmungen,
- Fig. 2: einen Schnitt nach der Linie II-II durch eine Kurbelwange in eine oberhalb eines Lagerzapfens verdrehten Pleuellagereinheit,
- Fig. 3: einen Ausschnitt der Kurbelwelle mit Ausnehmungen in den Kurbelwangen in einer Vorderansicht,
- Fig. 4: eine weitere Ausführung von Kurbelwangen mit unterschiedlich großen Ausnehmungen im Bereich des Pleuelzapfens,
- Fig. 5: einen Schnitt nach der Linie V-V der Fig. 4 und
- Fig. 6: einen Schnitt nach der Linie VI-VI der Fig. 4.

Die Kurbelwelle 1 einer Brennkraftmaschine umfaßt im wesentlichen von Lagerzapfen 2 abgehende Kröpfungen 3, die jeweils einen zwei Kurbelwangen 4 und 5 verbindenden Pleuelzapfen 6 umfaßt. In jeder Kurbelwange 4 und 5 der Welle 1 sind jeweils zwei Ausnehmungen 7 und 8 - in bezug auf die Längsachse - übereinanderliegend angeordnet, welche über eine Versteifungsrippe 9 getrennt sind.

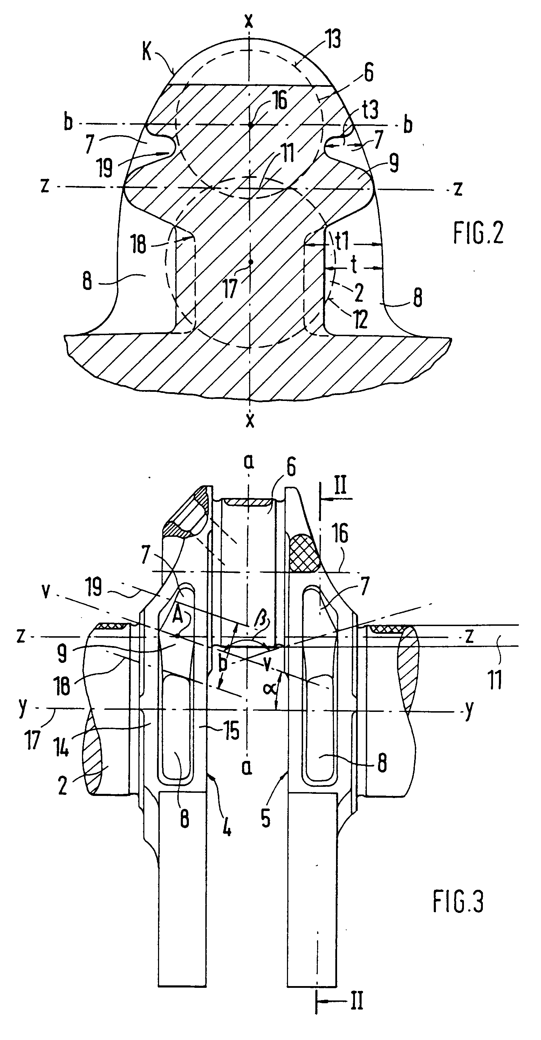

Wie Fig. 2 in Verbindung mit Fig. 3 näher zeigt, bilden die beiden Ausnehmungen 7 und 8 sogenannte Hohlkehlen und erstrecken sich in den vertikalen Längsebenen der Kurbelwangen 4 und 5, d.h., quer zu den Lagerzapfen 2 der Kurbelwelle 1.

Die erste Ausnehmung 8 weist ein größeres Volumen als die zweite Ausnehmung 7 auf und ist im Bereich des Lagerzapfens 2 angeordnet, wobei die zweite Ausnehmung 7 kleineren Volumens im Bereich des Pleuelzapfens 6 liegt. Die zwischen den beiden Ausnehmungen 7 und 8 angeordneten Versteifungsrippen 9 sind im Überdeckungsbereich 11 von Lagerzapfen 2 und Pleuelzapfen 6 vorgesehen.

Die erste Ausnehmung 8 kann unterschiedliche Tiefen t und t1 aufweisen, die bis in die Außenkontur 12 des Lagerzapfens 2 hineinragen. Die zweite Ausnehmung 7 hat eine Tiefe t3, die in Höhe der Außenkontur 13 des Pleuelzapfens 6 endet.

Die Ausnehmungen 7 und 8 in den Kurbelwangen 4 und 5 sind jeweils symmetrisch zu einer senkrechten Längsmittenebene x-x angeordnet und enden in der lichten Außenkontur K der Kurbelwangen 4 und 5. Die Ausnehmungen 7 und 8 bilden in den Wangen ein U-Profil mit Seitenschenkeln 14 und 15.

Die erste Ausnehmung 8 ist zu beiden Seiten einer durch die Lagerzapfen 2 verlaufenden horizontalen Mittenquerebene y-y (Fig. 3) angeordnet, wobei die zweite Ausnehmung 7 unterhalb eines durch die Mittenachse 16 des Pleuelzapfens 6 verlaufenden Ebene b-b angeordnet ist.

Die Versteifungsrippe 9 zwischen den beiden Ausnehmungen 7 und 8 erstreckt sich vorzugsweise bis zur Außenkontur K der Kurbelwange 4 und 5 und weist eine maximale Breite b auf.

Die Ausnehmung 8 erstreckt sich nahezu hälftig zu beiden Seiten der durch die Längsachse 17 des Lagerzapfens 2 gelegten horizontalen Ebene y-y, wobei die weitere Ausnehmung 7 in bezug auf die Lagerachse 16 des Pleuelzapfens 6 geringfügig unterhalb der durch diese Achse gelegten horizontalen Ebene b-b angeordnet ist. Zwischen diesen beiden Ebenen y-y und b-b erstreckt sich eine dritte horizontale Ebene z-z, die durch den Überdeckungsbereich 11 vom Lagerzapfen 2 und Pleuelzapfen 6 verläuft. In dieser Ebene z-z ist die Versteifungsrippe 9 mit ihrem höchsten Punkt A angeordnet, die unter einem Winkel α zur Achse 17 des Lagerzapfens 2 angestellt ist und einen Verlauf in der schrägen Ebene v-v aufweist. Zu dieser Ebene v-v verlaufen die Grundrißlinien 18, 19 der Seitenflächen der Ausnehmungen 8 und 7 bzw. der Versteifungsrippe 9 parallel.

Die Ebenen v-v der beiden Kurbelwangen 4 und 5 treffen sich in einer durch den Lagerzapfen 6 gelegten senkrechten Ebene a-a unter einem stumpfen Winkel β.

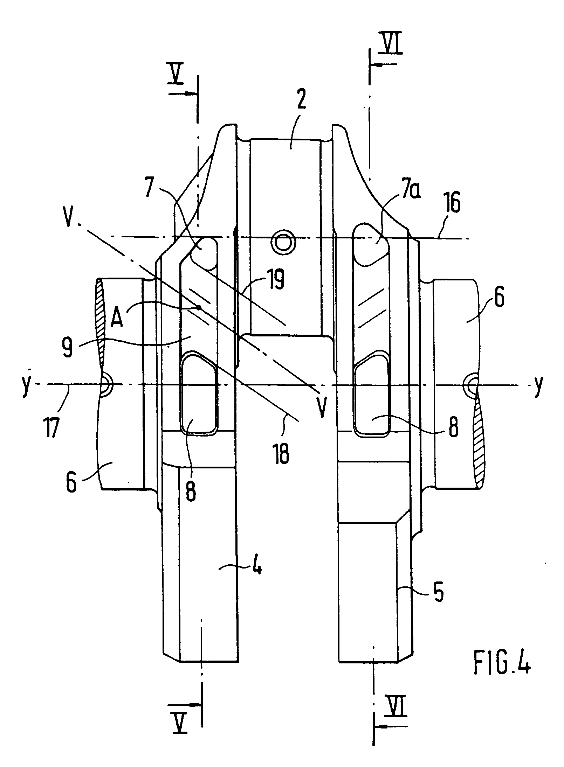

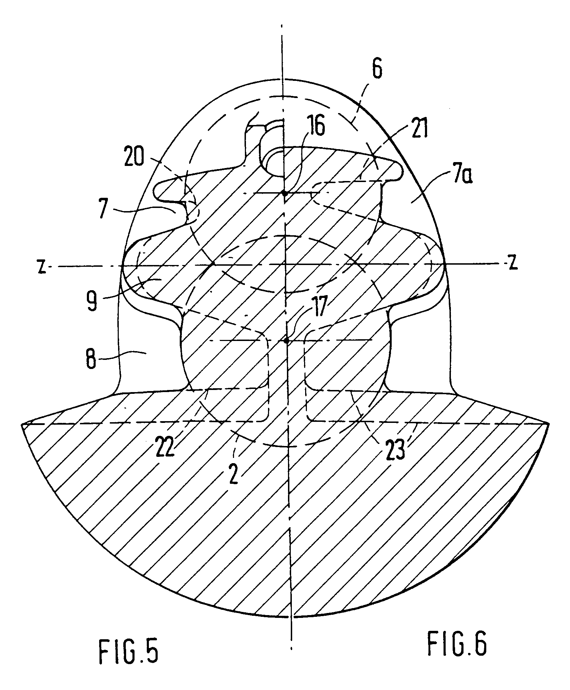

Gemäß der Ausführung nach den Fig. 2 und 3 weisen die gegenüberliegenden Ausnehmungen 7 und 8 jeder Kurbelwange 4 und 5 eine gleiche Größe und Form auf. Nach einer weiteren Ausführung gemäß der Fig. 4, 5 und 6 können diese Ausführungen den konstruktiven Gegebenheiten bzw. den Festigkeiten angepäßt auch eine Größe und Form aufweisen, die abweichend von der Ausführung gemäß der Fig. 2 und 3 ist. So ist in den Fig. 5 und 6 die Ausnehmung 7 in der Kurbelwange 4 kleiner und in der Form anders ausgeführt, als die Ausnehmung 7a der gegenüberliegenden Kurbelwange 5. Ebenso können die Ausnehmungen 7 und 8 in den Kurbelwangen 4 und 5 unterschiedlich in Form und Größe gestaltet sein. In gestrichelten Linien 20, 21 für die Ausnehmungen 7 und 7a sowie 22 und 23 für die Ausnehmungen 8 sind die möglichen Tiefen dieser Ausnehmungen beispielsweise dargestellt. Grundsätzlich ist die Versteifungsrippe 9 mit ihrem höchsten Punkt A in der Ebene z-z angeordnet, die den Überdeckungsbereich 11 zwischen Pleuelzapfen 6 und Lagerzapfen 2 kennzeichnet.

## Patentansprüche

1. Kurbelwelle (1) für eine Brennkraftmaschine mit Ausnehmungen (7, 8) aufweisenden Kurbelwangen (4, 5), dadurch gekennzeichnet, daß die Ausnehmungen (7, 8) in den Kurbelwangen (4, 5) jeweils symmetrisch zu einer senkrechten Längsmittenebene (x-x) gegenüberliegend innerhalb einer lichten Außenkontur (K) der Kurbelwangen (4, 5) eingeformt sind, die im Bereich der Ausnehmungen (7, 8) als im Querschnitt U-förmiges Profil mit Seitenschenkeln (14, 15) ausgeführt sind und zwischen den in übereinanderliegender Anordnung ausgeführten Ausnehmungen (7, 8) der Kurbelwangen (4, 5) im Überdeckungsbereich (11) von Kurbelzapfen (6) und Lagerzapfen (2) eine Versteifungsrippe (9) angeordnet ist.

2. Kurbelwelle nach Anspruch 1, dadurch gekennzeichnet, daß die Ausnehmungen (7, 8) als sogenannte Hohlkehlen ausgeführt sind und teilweise eine sich innerhalb der Außenkontur (12) des Lagerzapfens (2) erstreckende Tiefe (t, t1) aufweisen und sich zu beiden Seiten einer durch die Längsachse (17) des Lagerzapfens (2) der Kurbelwelle (1) verlaufenden horizontalen Mittenebene (y-y) erstrecken.

3. Kurbelwelle nach den Ansprüchen 1 oder 2, dadurch gekennzeichnet, daß die Ausnehmung (7) unterhalb einer durch die Längsachse (16) des Pleuelzapfens (6) verlaufenden horizontalen Ebene (b-b) angeordnet ist.

4. Kurbelwelle nach einem oder mehreren der vorhergehenden Ansprüche, dadurch gekennzeichnet, daß die beiden Ausnehmungen (7, 8) durch die Versteifungsrippe (9) getrennt sind, welche sich bis zur lichten Außenkontur (K) der Kurbelwange (4, 5) mit einer maximalen Breite (b) erstreckt und mit ihrer höchsten Erhebung (A) in einer Ebene (z-z) angeordnet ist, in der sich bei einer Projektion der Kurbelzapfen (6) mit dem Lagerzapfen (2) überdeckt.

5. Kurbelwelle nach einem oder mehreren der vorhergehenden Ansprüche, dadurch gekennzeichnet, daß die Versteifungsrippe (9) zwischen den beiden Ausnehmungen (7, 8) einer Kurbelwange (4, 5) unter einem spitzen Winkel (α) zur Längsachse (17) des Lagerzapfens (2) angestellt und in einer Ebene (v-v) angeordnet ist, zu der die Grundlinien (17, 18) der Begrenzungsflächen der Ausnehmungen (7, 8) bzw. der Versteifungsrippen (9) parallel verlaufen.

6. Kurbelwelle nach einem oder mehreren der vorhergehenden Ansprüche, dadurch gekennzeichnet, daß die beiden Ebenen (v-v) der Versteifungsrippen (9) von gegenüberliegenden Kurbelwangen (4, 5) sich etwa in einer durch den Lagerzapfen (2) gelegten senkrechten Ebene (a-a) unter einem stumpfen Winkel (β) treffen.

7. Kurbelwelle nach einem oder mehreren der vorhergehenden Ansprüche, dadurch gekennzeichnet, daß die Ausnehmungen (7) in den Kurbelwangen (4, 5) im Bereich des Pleuelzapfens (6) ein kleineres Volumen aufweisen als die Ausnehmungen (8) in den Kurbelwangen (4, 5) im Bereich des Lagerzapfens (2).

8. Kurbelwelle nach einem oder mehreren der vorhergehenden Ansprüche, dadurch gekennzeichnet, daß die Ausnehmungen (7, 7a) in gegenüberliegenden Kurbelwangen (4, 5) im Bereich des Pleuelzapfens (6) mit einem unterschiedlichen Volumen ausgeführt sind, wobei das Volumen der weiteren Ausnehmungen (8) in gegenüberliegenden Kurbelwangen (4, 5) etwa gleich groß ist (Fig. 4).

9. Kurbelwelle nach einem oder mehreren der Ansprüche 1 bis 7, dadurch gekennzeichnet, daß die Ausnehmungen (7, 8) in gegenüberliegenden Kurbelwangen (4, 5) im Bereich des Pleuelzapfens (6) sowie in gegenüberliegenden Kurbelwangen (4, 5) im Bereich des Lagerzapfens (2) gleich groß sind.

10. Kurbelwelle nach einem oder mehreren der vorhergehenden Ansprüche, dadurch gekennzeichnet, daß die beiden seitlichen Grundlinien (18, 19) der Begrenzungsflächen der Versteifungsrippen (9) parallel zu der durch die max. Erhebung (A) der Rippe (9) verlaufenden Ebene (v-v) angeordnet sind.

## Claims

1. A crankshaft (1) for an internal-combustion engine with crank webs (4, 5) provided with recesses (7, 8), **characterized in that** the recesses (7, 8) are formed in the crank webs (4, 5) respectively opposite one another and symmetrically about a vertical longitudinal median plane (**x-x**) within an inside outer profile (**K**) of the crank webs (4, 5), which in the region of the recesses (7, 8) are formed as profiles of U-shaped cross-section with lateral flanks (14, 15), and a reinforcement rib (9) is provided between the recesses (7, 8) of the crank webs (4, 5) arranged one above the other in the area of overlap (11) of the crank pin (6) and the bearing pin (2).

2. A crankshaft according to Claim 1, **characterized in that** the recesses (7, 8) are constructed as so-called hollow channels and in part have a depth (**t**, **t1**) extending inside the outer profile (12) of the bearing pin (2) and they extend on both sides of a horizontal median plane (**y-y**) extending through the longitudinal axis (17) of the bearing pin (2) of the crankshaft (1).

3. A crankshaft according to Claim 1 or 2, **characterized in that** the recess (7) is provided below a horizontal plane (**b-b**) extending through the longitudinal axis (16) of the connecting-rod pin (6).

4. A crankshaft according to one or more of the preceding Claims, **characterized in that** the two recesses (7, 8) are separated by the reinforcement rib (9) which extends as far as the inside outer profile (**K**) of the crank web (4,5) with a maximum width (**b**) and is situated with its greatest projection (**A**) in a plane (**z-z**) in which the crank pin (6) is covered by the bearing pin (2) when projected.

5. A crankshaft according to one or more of the preceding Claims, **characterized in that** the reinforcement rib (9) between the two recesses (7,8) of a crank web (4, 5) is set at an acute angle (α) to the longitudinal axis (17) of the bearing pin (2) and is situated in a plane (**v-v**) to which the base lines (17, 18) of the boundary faces of the recesses (7, 8) and the reinforcement ribs (9) respectively run parallel.

6. A crankshaft according to one or more of the preceding Claims, **characterized in that** the two planes (**v-v**) of the reinforcement ribs (9) of opposite crank webs (4, 5) meet at an obtuse angle (**β**) substantially in a vertical plane (**a-a**) passing through the bearing pin (2).

7. A crankshaft according to one or more of the preceding Claims, **characterized in that** the recesses (7) in the crank webs (4, 5) in the region of the connecting-rod pin (6) have a smaller volume than the recesses (8) in the crank webs (4, 5) in the region of the bearing pin (2).

8. A crankshaft according to one or more of the preceding Claims, **characterized in that** the recesses (7, 7a) in opposite crank webs (4, 5) in the region of the connecting-rod pin (6) are made with different volumes, while the volume of the further recesses (8) in opposite crank webs (4,5) is substantially the same size (Fig. 4).

9. A crankshaft according to one or more of Claims 1 to 7, **characterized in that** the recesses (7, 8) in opposite crank webs (4,5) in the region of the connecting-rod pin (6) and in opposite crank webs (4, 5) in the region of the bearing pin (2) are substantially the same size.

10. A crankshaft according to one or more of the preceding Claims, **characterized in that** the two lateral base lines (17, 18) of the boundary faces of the reinforcement ribs (9) are arranged parallel to the plane (**v-v**) extending through the maximum raised projection (**A**) of the rib (9).

## Revendications

1. Vilebrequin (1) d'un moteur à combustion interne avec des flasques (4, 5) présentant des évidements (7, 8), caractérisé en ce que les évidements (7, 8) sont formés dans les flasques (4, 5), l'un face à l'autre, symétriquement par rapport à un axe médian longitudinal (x-x) vertical, à l'intérieur d'un contour extérieur total (K) des flasques (4, 5), qui dans la région des évidements (7, 8), présente un profil de section transversale en U avec des branches latérales (14, 15) et en ce qu'une nervure de renfort (9) est prévue entre les évidements (7, 9) réalisés superposés des flasques (4, 5) dans la zone de recouvrement (11) du tourillon du vilebrequin (6) et du tourillon de palier (2).

2. Vilebrequin selon la revendication 1, caractérisé en ce que les évidements (7, 8) sont réalisés sous la forme de ce qu'il est convenu d'appeler des gorges creuses et présentent en partie une profondeur (t, t1) s'étendant à l'intérieur du contour extérieur (12) du tourillon de palier (2) et s'étendent de part et d'autre d'un plan médian (y-y) horizontal, passant par l'axe longitudinal (17) du tourillon de palier (2) du vilebrequin (1).

3. Vilebrequin selon la revendication 1 ou 2, caractérisé en ce que l'évidement (7) est prévu au-dessous d'un plan horizontal (b-b) passant par l'axe longitudinal (16) du tourillon (6) du vilebrequin.

4. Vilebrequin selon une ou plusieurs des revendications précédentes, caractérisé en ce que les deux évidements (7, 8) sont séparés par la nervure de renfort (9), qui s'étend jusqu'au contour extérieur total (K) des flasques (4, 5) avec une largeur maximale (b) et avec son relief maximal (A) dans un plan (z-z), dans lequel le tourillon (6) du vilebrequin recouvre le tourillon de palier (2), en projection.

5. Vilebrequin selon une ou plusieurs des revendications précédentes, caractérisé en ce qu'entre les deux évidements (7, 8) d'un flasque (4, 5), la nervure de renfort (9) est inclinée sous un angle aigu (α) par rapport à l'axe longitudinal (17) du tourillon de palier (2) et se situe dans un plan (v-v) auquel les lignes de base (17, 18) des surfaces de délimitation des évidements (7, 8) ou des nervures de renfort (9) sont parallèles.

6. Vilebrequin selon une ou plusieurs des revendications précédentes, caractérisé en ce que les deux plans (v-v) des nervures de renfort (9) de flasques (4, 5) opposés l'un à l'autre se coupent à peu près, sous un angle obtus (β), dans un plan vertical (a-a), passant par le tourillon de palier (2).

7. Vilebrequin selon une ou plusieurs des revendications précédentes, caractérisé en ce que les évidements (7) pratiqués dans les flasques (4, 5) présentent, dans la zone du tourillon (6) du vilebrequin, un plus petit volume que les évidements (8) des flasques (4, 5) dans la région du tourillon de palier (2).

8. Vilebrequin selon une ou plusieurs des revendications précédentes, caractérisé en ce que les évidements (7, 7a) de flasques (4, 5) opposés l'un à l'autre sont d'un volume différent dans la région du tourillon (6) du vilebrequin, le volume des autres évidements (8) de flasques (4, 5) opposés l'un à l'autre étant à peu près égal (figure 4).

9. Vilebrequin selon une ou plusieurs des revendications 1 à 7, caractérisé en ce que les évidements (7, 8) de flasques (4, 5) opposés l'un à l'autre sont égaux dans la région du tourillon (6) du vilebrequin ainsi que dans des flasques (4, 5) opposés l'un à l'autre, dans la région du tourillon de palier (2).

10. Vilebrequin selon une ou plusieurs des revendications précédentes, caractérisé en ce que les deux lignes de base (18, 19) latérales des surfaces de délimitation des nervures de renfort (9) sont parallèles au plan (v-v) passant par le relief maximal (A) de la nervure (9).
